(19) Europäisches Patentamt
European Patent Office
Office européen des brevets

(11) Publication number: 0 002 842
B1

(12) EUROPEAN PATENT SPECIFICATION

(45) Date of publication of patent specification: 02.06.82

(51) Int. Cl.³: C 07 C 153/05, A 01 N 37/48

(21) Application number: 78200228.1

(22) Date of filing: 06.10.78

# (54) Propanthioic acid derivatives, herbicidal and/or plant growth regulating compositions comprising these derivatives and method of destroying or preventing undesirable plant growth.

(30) Priority: 17.10.77 US 842772

(43) Date of publication of application:
11.07.79 Bulletin 79/14

(45) Publication of the grant of the patent:
02.06.82 Bulletin 82/22

(84) Designated Contracting States:
CH DE FR GB NL

(56) References cited:
DE - A - 2 008 601
DE - A - 2 162 073
FR - A - 1 421 215
GB - A - 1 039 459

(73) Proprietor: SHELL INTERNATIONALE RESEARCH MAATSCHAPPIJ B.V.
Carel van Bylandtlaan 30
NL-2596 HR DEN HAAG (NL)

(72) Inventor: Entwistle, Ian David
44 Woodside Gardens
Sittingbourne Kent (GB)

(74) Representative: Rogers, Roy Charles et al,
4 York Road
London SE1 7NA (GB)

EP 0 002 842 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Propanthioic acid derivatives, herbicidal and/or plant growth regulating compositions comprising these derivatives and method of destroying or preventing undesirable plant growth

The invention relates to new propanthioic acid derivatives.

The invention further relates to herbicidal and/or plant growth regulating compositions comprising one or more propanthioic acid derivatives as active ingredients and to a method of destroying or preventing undesirable plant growth at a locus.

It is known that certain propanthioic acid derivatives containing a nitroaniline moiety in their molecules exhibit herbicidal activity (cf. UK patent specification 1,500,432). German Offenlegungsschrift 2,008,601 discloses a class of 2,6-dinitroanilinoalkylthiocarboxamides which are useful as herbicides.

The invention now provides a specific category of propanthioic acid derivatives which can be represented by the general formula:

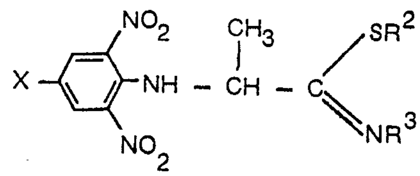

I

wherein X represents a hydrogen or a halogen atom or an alkyl group optionally substituted by halogen and $R^2$ and $R^3$ represent the same or different alkyl groups or acid addition salts thereof.

It will be appreciated that the compounds represented by formula I have an asymmetric carbon atom and therefore can exhibit optical isomerism. The individual isomers and/or mixtures thereof are included within the scope of the invention. It will also be appreciated that certain isomers of the compounds represented by formula I may have more herbicidal activity than other isomers or mixtures thereof and that it can be desirable to effect separation of the more active isomer(s).

Preferred compounds, in view of their herbicidal properties, among those represented by formula I are compounds wherein X represents a hydrogen atom, a fluorine, chlorine or bromine atom, or an alkyl group containing from 1 to 6 carbon atoms optionally substituted by from 1 to 3 halogen atoms. In particular compounds are preferred wherein X represents a chlorine or bromine atom, a methyl, ethyl or tri-fluoromethyl group and $R^2$ and $R^3$ each independently represents an alkyl group containing from 1 to 3 carbon atoms, or an acid addition salt thereof.

Generally more active and therefore most preferred are those compounds of formula I, wherein X represents a hydrogen atom or a methyl group and $R^2$ and $R^3$ each independently represents a methyl or ethyl group or an acid addition salt thereof.

Typical species contemplated within the scope of the invention include:

S-methyl N-propyl-2-(4-fluoro-2,6-dinitroanilino)propanimidothioate hydrobromide addition salt,

S-ethyl N-methyl-2-(4-butyl-2,6-dinitroanilino)propanimidothioate,

S-ethyl N-ethyl-2-(4-chloro-2,6-dinitroanilino)propanimidothioate methyl hydrosulphate addition salt,

S-propyl N-methyl-2-(4-trifluoromethyl-2,6-dinitroanilino)propanimidothioate hydro-iodide addition salt,

S-methyl-N-ethyl-2-(2,6-dinitro-4-methylanilino)propanimidothioate, and

S-ethyl-N-ethyl-2-(2,6-dinitro-4-methylanilino)propanimidothioate tetrafluoroboric acid addition salt.

The compounds according to the invention can be conveniently prepared from 2-(2,6-dinitroanilino)thiopropanamides. For example, the appropriate thiopropanamide can be reacted with a reagent, such as an alkyl halosulphonate, a dialkyl sulphate or a trialkyl oxonium tetrafluoroborate. If the acid addition salt is prepared first, it can be converted to the free base by treatment with, e.g., aqueous sodium bicarbonate.

The acid addition salts may be prepared from inorganic or organic acids. Suitable inorganic acids include hydrohalogenic acids, such as hydrochloric and hydrobromic, sulphoxy acids, such as sulphuric, fluorosulphonic, phosphorus acids, such as phosphoric, and nitrogen acids, such as nitric or boron acids, such as boric or borofluoric acid. Suitable organic acids include lower alkanoic, alkanesulphonic, alkenoic, alkenedioic, hydroxyalkanoic or alkanedioic acids, examples being maleic, fumaric, citric, tartaric, methanesulphonic, ethanesulphonic, acetic and crotonic acid.

The compounds according to the invention include the acid salts thereof have been found to be useful for controlling undesirable plant growth. That is, certain members of the class have been found to be herbicidally effective against a wide range of plant species. Others of the class are effective only against a limited number of plant species and are considered to be selective herbicides. Some of the compounds exhibit a high degree of herbicidal activity in the control of a variety of economically important species of grasses and broadleaved weeds. Some of the compounds are particularly useful as selective herbicides for use in certain important crops.

Plant growth-regulating compositions comprising a carrier or a surface-active agent, or both a carrier and a surface-active agent, and, as active ingredient, at least one compound of formula I are within the scope of the invention.

The term "carrier" as used herein means a solid or fluid material, which may be inorganic or organic and of synthetic or natural origin, with which the active compound is mixed or formulated to facilitate its application to the plant, seed, soil or other object to be treated, or its storage, transport or handling.

Suitable solid carriers are natural and synthetic clays and silicates, for example, natural silicas, such as diatomaceous earths; magnesium silicates, for example, talcs; magnesium aluminium silicates, for example, attapulgites and vermiculites; aluminium silicates, for example, kaolinites, montmorillinites and micas; calcium carbonates; calcium sulphate; synthetic hydrated silicon oxides and synthetic calcium or aluminium silicates; elements, such as for example, carbon and sulphur; natural and synthetic resins, such as, for example, coumarone resins, polyvinyl chloride and styrene polymers and copolymers; solid polychlorophenols; bitumen, waxes, such as for example, beeswax, paraffin wax, and chlorinated mineral waxes; and solid fertilizers, for example superphosphates.

Examples of suitable fluid carriers are water, alcohols, such as for example, isopropanol, glycols; ketones, such as for example, acetone, methyl ethyl ketone, methyl isobutyl ketone and cylcohexanone; ethers; aromatic hydrocarbons, such as for example, benzene, toluene and xylene; petroleum fractions, such as for example, kerosene, light mineral oils; chlorinated hydrocarbons, such as for example, carbon tetrachloride, perchloroethylene, trichloroethane, including liquefied normally vaporous gaseous compounds. Mixtures of different liquids are often suitable.

The surface-active agent may be an emulsifying agent or a dispersing agent or a wetting agent; it may be non-ionic or ionic. Any of the surface-active agents usually applied in formulating herbicides or insecticides may be used. Examples of suitable surface-active agents are the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohols or alkyl phenols, for example p-octyl phenol or p-octyl cresol, with ethylene oxide and/or propylene oxide; sulphates or sulphonates of these condensation products, alkali or alkaline earth metal salts, preferably sodium salts, or sulphuric or sulphonic acid esters containing at least 10 carbon atoms in the molecule, for example, sodium lauryl sulphate, sodium secondary alkyl sulphates, sodium salts of sulphonated castor oil, and sodium alkylaryl sulphonates, such as sodium dodecylbenzene sulphonate; and polymers of ethylene oxide and copolymers of ethylene oxide and propylene oxide.

The compositions according to the invention may be formulated as wettable powders, dusts, granules, solutions, emulsifiable concentrates, emulsions, suspension concentrates and aerosols and will generally contain 0.5 to 95%w, preferably 0.5 to 75%w of toxicant. Wettable powders are usually compounded to contain 25, 50 or 75% by weight of toxicant and usually contain in addition to solid carrier, 3—10% by weight of a dispersing agent, 1—5%w of a surface-active agent and where necessary, 0—10% by weight of stabilizer(s) and/or other additives, such as penetrants or stickers. Dusts are usually formulated as a dust concentrate having a similar composition to that of a wettable powder but without a dispersant or surface-active agent, and are diluted in the field with further solid carrier to give a composition usually containing $\frac{1}{2}$—10% by weight of toxicant. Granules are usually prepared to have a size between 10 and 100 BS mesh (1.676—0.152 mm), and may be manufactured by agglomeration or impregnation techniques. Generally granules will contain $\frac{1}{2}$—25% by weight of toxicant and 0—10% by weight of additives, such as stabilizers, slow-release modifiers and binding agents. Emulsifiable concentrates usually contain, in addition to the solvent and, when necessary, cosolvent, 10—50% weight per volume toxicant, 2—20% weight per volume emulsifiers and 0—20% weight per volume of appropriate additives, such as stabilizers, penetrants and corrosion inhibitors. Suspension concentrates are compounded so as to obtain a stable, non-sedimenting, flowable product and usually contain 10—75%w of toxicant, 0.5—5%w of dispersing agents, such as protective colloids and thixotropic agents, 0—10%w of appropriate additives, such as defoamers, corrosion inhibitors, stabilizers, penetrants and stickers, and as carrier, water or an organic liquid in which the toxicant is substantially insoluble; certain organic solids or inorganic salts may be dissolved in the carrier to assist in preventing sedimentation or as anti-freeze agents for water.

Aqueous dispersions and emulsions, for example, compositions obtained by diluting a wettable powder or a concentrate according to the invention with water, also lie within the scope of the present invention. The said emulsions may be of the water-in-oil or of the oil-in-water type, and may have a thick mayonaise-like consistency.

The compositions according to the invention may also contain other ingredients, for example, other compounds possessing pesticidal, especially insecticidal, acaricidal, herbicidal or fungicidal properties.

The method of applying the compounds according to the invention comprising applying a compound of formula I, ordinarily in a composition of one of the aforementioned types, to a locus or area to be protected from undesirable plant growth, such as the foliage of the plants or the plant growth

medium, e.g., soil in which the plant is growing or is to be grown. The active compound, of course, is applied in amounts sufficient to exert the desired action.

The amount of active compound to be used in controlling undesirable vegetation will naturally depend on the condition of the vegetation, the degree of activity desired, the formulation used, the mode of application, the climate, the season of the year, and other variables. Recommendations as to precise amounts are, therefore, not possible. In general, however, application to the locus to be protected of from 0.1 to 10.0 pounds per acre of the compound used in this invention will be satisfactory.

The manner in which the compounds according to the invention can be prepared is illustrated in the following Examples, which demonstrate the preparation of typical species of the invention. In these examples, the identities of the compounds, intermediates and final, were confirmed by elemental analysis, and infra-red and nuclear magnetic spectral analyses. The examples are for the purpose of illustration only and should not be regarded as limiting the invention in any way.

### Example 1

Preparation of S-methyl *d*-2-(2,6-dinitro-4-methylanilino)-N-methylpropanimidothioate hydrofluorosulphonate

To a solution of 3.0 g of *d*-2-(2,6-dinitro-4-methylanilino)-N-methylthiopropionamide in 50 ml* of methylene chloride was added in one portion 1.3 g of methyl fluorosulphonate. The reaction mixture was stirred continuously overnight at room temperature. The next day the reaction flask was scratched to produce a solid which was collected and air-dried to yield 4.0 g of product as yellow solid; m.p.: 138—140°C.

### Example 2

Preparation of S-methyl *d,1*-2-(2,6-dinitro-4-methylanilino)-N-methylpropanimidothioate

A suspension of 2.4 g of methyl *d,1*-2-(2,6-dinitro-4-methylanilino)-N-methylpropanimidothioate hydrofluorosulphonate in 50 ml of saturated $NaHCO_3$ solution and 10 ml of diethyl ether was allowed to stir at room temperature for 2 hours. The resulting phases were separated and the diethyl ether phase was dried and concentrated to leave 1.5 g of product as a yellow solid; m.p.: 109—111°C.

### Examples 3—15

Following procedures similar to those used in Examples 1 and 2, additional propanimidothioic acid derivatives were prepared as set forth in Table I.

TABLE I

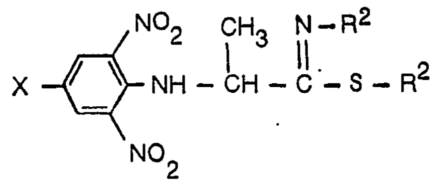

| Example | X | $R^3$ | salt | $R^2$ | % yield | M.P.; °C |
|---|---|---|---|---|---|---|
| 3 | $CH_3$ | $CH_3$ | — | $CH_3$ | 33 | 98—100 |
| 4 | $CH_3$ | $C_2H_5$ | $HBF_4$ | $CH_3$ | 51 | 80.5—82.5 |
| 5 | $CH_3$ | $C_2H_5$ | $HBF_4$ | $CH_3$ | 48 | 71—82 |
| 6 | $CF_3$ | $CH_3$ | — | $CH_3$ | 45 | 82—84 |
| 7 | $CF_3$ | $CH_3$ | $HSO_3F$ | $CH_3$ | 82 | 143.5—144 |
| 8 | $CH_3$ | $C_2H_5$ | — | $C_2H_5$ | 51 | 56—58.5 |
| 9 | $CH_3$ | $CH_3$ | — | $CH_3$ | 98 | 94—96.5 |
| 10 | H | $CH_3$ | — | $CH_3$ | 100 | 68—70 |
| 11 | H | $CH_3$ | $HSO_3F$ | $CH_3$ | 65 | 132.5—133 |
| 12 | $CH_3$ | $CH_3$ | $HBF_4$ | $C_2H_5$ | 75 | 157—158 |
| 13 | $CH_3$ | $CH_3$ | — | $C_2H_5$ | 60 | 94 |
| 14 | $CH_3$ | $CH_3$ | $HSO_3F$ | $CH_3$ | 65 | 125 (with decomposition) |
| 15 | $CH_3$ | $CH_3$ | $HSO_3F$ | $CH_3$ | 59 | 107—109 |

Example 16

Evaluation of herbicidal activity

The pre-emergence herbicidal activity of the compounds of the invention was evaluated by planting seeds of water grass, garden cress, downey brome, velvet leaf, yellow foxtail and sicklepod in test tubes, nominally measuring 25 x 200 millimetres, containing soil treated with the test compound at the rates of 0.1 and 1 mg per tube designated in Table II as Rates I and II, respectively. The planted soil was held under controlled conditions of temperature, moisture, and light for 11 to 12 days. The amount of germination and growth in each tube were evaluated on a 0 to 9 scale, 0 rating indicating no effect, 9 death of the seedlings or no germination.

The post-emergence activity of the compounds of this invention was evaluated by spraying 7-day old crabgrass plants, 10 day old pigweed plants, 6-day old downey brome plants, 9-day old velvet leaf, 10-day old yellow foxtail plants, and 7-day old sicklepod plants to run-off with a liquid formulation of the test compound at the rates of 0.8 millilitre of an 0.025% solution designated as Rate I in Table II, and 0.8 millilitre of an 0.25% solution designated as Rate II in Table II. The sprayed plants were held under controlled conditions for 10 to 11 days and the effect of the test compound was then evaluated visually, the results being rated on the 0 to 9 scale described above.

The results of the pre- and post-emergence tests are summarized in Table II.

TABLE II

Herbicide screen results

| | Pre-emergence (soil) | | | | | | | Post-emergence (foliar) | | | | | |
|---|---|---|---|---|---|---|---|---|---|---|---|---|---|
| | Watergrass | Garden cress | Downey brome | Velvet leaf | Yellow foxtail | Sicklepod | | Crabgrass | Pigweed | Downey brome | Velvet leaf | Yellow foxtail | Sicklepod |
| Example | $^{I}_{II}$ | $^{I}_{II}$ | $^{I}_{II}$ | $^{I}_{II}$ | $^{I}_{II}$ | $^{I}_{II}$ | Rates | $^{I}_{II}$ | $^{I}_{II}$ | $^{I}_{II}$ | $^{I}_{II}$ | $^{I}_{II}$ | $^{I}_{II}$ |
| 1 | $^{-}_{-}$ | $^{6}_{8}$ | $^{8}_{9}$ | $^{7}_{9}$ | $^{8}_{9}$ | $^{-}_{-}$ | | $^{0}_{2}$ | $^{0}_{5}$ | $^{3}_{6}$ | $^{5}_{9}$ | $^{2}_{2}$ | $^{-}_{-}$ |
| 2 | $^{-}_{-}$ | $^{7}_{9}$ | $^{8}_{9}$ | $^{7}_{9}$ | $^{8}_{9}$ | $^{-}_{-}$ | | $^{7}_{9}$ | $^{0}_{9}$ | $^{0}_{0}$ | $^{4}_{9}$ | $^{9}_{9}$ | $^{-}_{-}$ |
| 3 | $^{-}_{-}$ | $^{0}_{6}$ | $^{0}_{8}$ | $^{0}_{9}$ | $^{4}_{9}$ | $^{-}_{-}$ | | $^{4}_{9}$ | $^{4}_{7}$ | $^{3}_{8}$ | $^{5}_{7}$ | $^{8}_{9}$ | $^{-}_{-}$ |
| 4 | $^{-}_{-}$ | $^{8}_{9}$ | $^{7}_{9}$ | $^{7}_{9}$ | $^{9}_{9}$ | $^{-}_{-}$ | | $^{0}_{4}$ | $^{0}_{9}$ | $^{0}_{7}$ | $^{0}_{7}$ | $^{7}_{7}$ | $^{-}_{-}$ |
| 5 | $^{-}_{-}$ | $^{4}_{7}$ | $^{7}_{9}$ | $^{7}_{9}$ | $^{8}_{9}$ | $^{-}_{-}$ | | $^{2}_{6}$ | $^{4}_{8}$ | $^{0}_{4}$ | $^{0}_{7}$ | $^{0}_{3}$ | $^{-}_{-}$ |
| 6 | $^{-}_{-}$ | $^{0}_{8}$ | $^{2}_{8}$ | $^{6}_{6}$ | $^{7}_{8}$ | $^{-}_{-}$ | | $^{0}_{2}$ | $^{0}_{3}$ | $^{0}_{0}$ | $^{0}_{2}$ | $^{2}_{8}$ | $^{-}_{-}$ |
| 7 | $^{-}_{-}$ | $^{0}_{6}$ | $^{0}_{3}$ | $^{0}_{2}$ | $^{0}_{8}$ | $^{-}_{-}$ | | $^{0}_{7}$ | $^{0}_{5}$ | $^{0}_{0}$ | $^{0}_{0}$ | $^{0}_{9}$ | $^{-}_{-}$ |
| 8 | $^{-}_{-}$ | $^{0}_{9}$ | $^{7}_{9}$ | $^{6}_{9}$ | $^{8}_{9}$ | $^{-}_{-}$ | | $^{5}_{9}$ | $^{4}_{9}$ | $^{0}_{1}$ | $^{1}_{5}$ | $^{4}_{4}$ | $^{-}_{-}$ |
| 9 | $^{-}_{-}$ | $^{7}_{9}$ | $^{8}_{9}$ | $^{9}_{9}$ | $^{9}_{9}$ | $^{-}_{-}$ | | $^{7}_{9}$ | $^{8}_{9}$ | $^{5}_{9}$ | $^{6}_{8}$ | $^{8}_{9}$ | $^{-}_{-}$ |
| 10 | $^{0}_{9}$ | $^{2}_{8}$ | $^{5}_{9}$ | $^{5}_{9}$ | $^{4}_{9}$ | $^{6}_{9}$ | | $^{8}_{9}$ | $^{6}_{9}$ | $^{6}_{8}$ | $^{0}_{9}$ | $^{9}_{9}$ | $^{0}_{9}$ |
| 11 | $^{1}_{7}$ | $^{1}_{6}$ | $^{4}_{9}$ | $^{0}_{9}$ | $^{5}_{9}$ | $^{6}_{9}$ | | $^{2}_{9}$ | $^{3}_{9}$ | $^{0}_{8}$ | $^{0}_{9}$ | $^{9}_{9}$ | $^{0}_{9}$ |
| 15 | $^{-}_{-}$ | $^{0}_{0}$ | $^{0}_{0}$ | $^{0}_{0}$ | $^{0}_{0}$ | $^{-}_{-}$ | | $^{0}_{2}$ | $^{1}_{9}$ | $^{0}_{0}$ | $^{0}_{2}$ | $^{0}_{4}$ | $^{-}_{-}$ |

To demonstrate their herbicidal activity, the compounds of Examples 12, 13 and 14 were tested using, as a representative range of plants:— oat (O; *Avena sativa*), maize (MA; *Zea mays*), rice (R; *Oryza sativa*); barnyard grass (B; *Echinochloa crusgalli*), soya bean (SO; *Glycine max.*), sugar beet (SB; *Beta vulgaris*), linseed (L; *Linum usitatissmum*), and mustard (M; *Sinapis alba*).

The tests fall into two categories, pre-emergence and post-emergence tests. The pre-emergence tests involve the spraying of a liquid formulation of the compound onto the soil in which the seeds of the plant species mentioned above have recently been sown. The post-emergence tests involved two types of tests, viz. soil drench and foliar spray tests. In the soil drench tests the soil was drenched with a liquid formulation containing a compound of the invention after the seeds of the plant species mentioned above have been germinated, in the foliar spray tests seedling plants were sprayed with such a formulation.

The formulations used in the above tests consisted of 50 parts by volume of acetone, 50 parts by volume of water, 0.5 part by weight of an alkylphenol/ethylene oxide condensate available under the trade name Triton ("TRITON" is a registered Trade Mark) X-155, and a compound according to the invention in varying amounts.

The seeds of the plant species mentioned above were sown and allowed to germinate in steam-sterilized John Innes Compost.

In the soil spray and foliar spray tests two dosage levels, equivalent to 5 and 1 kilograms of active material per hectare respectively were applied in a volume equivalent to 606 litres per hectare. In the soil drench test one dosage level, equivalent to 10 kilograms active material per hectare, was applied at a volume equivalent to 2200 litres per hectare.

Control tests were also carried out in which sown soil, soil bearing seedling plants, and plants were sprayed or drenched with the same volumes of compositions from which the compound of the invention had been omitted.

The herbicidal effects of the compounds concerned were assessed visually seven days after spraying the foliage and drenching the soil (post-emergence test) and eleven days after spraying the soil (pre-emergence test), and were recorded on a 0—9 scale (0 = no effect and 9 = very strong herbicidal effect). A rating 2 approximately corresponds to a reduction in fresh weight of stem and leaf of the treated plants of 25%, a rating 5 approximately corresponds to a reduction in weight of 55%, a rating 9 to a reduction in weight of 95%, etc.

The results are summarized in the following Table III.

TABLE III

| Compound of Example | Dosage kg/ha | Post-emergence (plants) | | | | | | | | | | | | | | | | | Pre-emergence (seeds) | | | | | | | |
|---|---|---|---|---|---|---|---|---|---|---|---|---|---|---|---|---|---|---|---|---|---|---|---|---|---|---|
| | | Soil drench | | | | | | | | Dosage kg/ha | Foliar spray | | | | | | | | Soil spray | | | | | | | |
| | | MA | R | B | O | L | M | SB | SO | | MA | R | B | O | L | M | SB | SO | MA | R | B | O | L | M | SB | SO |
| 12 | 10 | 5 | 3 | 7 | 8 | 7 | 6 | 6 | 5 | 5 | 8 | 7 | 9 | 9 | 9 | 9 | 9 | 7 | 7 | 9 | 9 | 8 | 8 | 8 | 9 | 8 |
| | | | | | | | | | | 1 | 4 | 2 | 8 | 7 | 7 | 6 | 9 | 5 | 6 | 9 | 9 | 7 | 7 | 6 | 8 | 6 |
| 13 | 10 | 4 | 6 | 5 | 6 | 0 | 3 | 0 | 0 | 5 | 3 | 2 | 5 | 5 | 7 | 7 | 5 | 5 | 3 | 5 | 8 | 8 | 6 | 4 | 8 | 0 |
| | | | | | | | | | | 1 | 1 | 0 | 2 | 2 | 3 | 4 | 4 | 4 | 1 | 0 | 5 | 2 | 0 | 0 | 2 | 0 |
| 14 | 10 | 5 | 4 | 7 | 7 | 7 | 7 | 5 | 5 | 5 | 7 | 3 | 8 | 8 | 9 | 5 | 8 | 4 | 7 | 9 | 9 | 8 | 7 | 5 | 8 | 4 |
| | | | | | | | | | | 1 | 4 | 3 | 6 | 6 | 7 | 4 | 6 | 4 | 4 | 6 | 9 | 6 | 7 | 3 | 6 | 4 |

## Claims

1. Anilinoalkylthioic acid derivatives of the general formula:

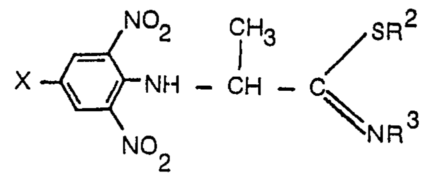

I

wherein X represents a hydrogen or a halogen atom or an alkyl group optionally substituted by halogen and $R^2$ and $R^3$ represent the same or different alkyl groups or acid addition salts thereof.

2. A compound as claimed in claim 1, characterized in that X represents a methyl group.

3. A compound as claimed in either of claims 1 or 2, characterized in that $R^2$ and $R^3$ each independently represents a methyl or ethyl group.

4. A compound as claimed in claim 1 which is S-methyl-N-ethyl-2-(2,6-dinitro-4-methylanilino)-propanimidothioate.

5. A compound as claimed in claim 1 which is S-ethyl-N-ethyl-2-(2,6-dinitro-4-methylanilino)-propanimidothioate tetrafluoroboric acid addition salt.

6. A compound as claimed in claim 1 which is S-methyl *d*-N-methyl-2-(2,6-dinitro-4-methyl-anilino)propanimidothioate fluorosulphonic acid addition salt.

7. A compound as claimed in claim 1 which is S-methyl *d,1*-N-methyl-2-(2,6-dinitro-4-methyl-anilino)propanimidothioate.

8. A herbicidal and/or plant growth-regulating composition comprising a carrier and/or a surface-active agent and as active ingredient at least one compound as claimed in claim 1.

9. A method of destroying or preventing undesirable plant growth at a locus which comprises applying to the locus to be protected a herbicidally effective amount of a compound as claimed in claim 1 or a composition thereof as claimed in claim 8.

## Revendications

1. Des dérivés d'acides anilinoalcoylthioïques de la formule générale

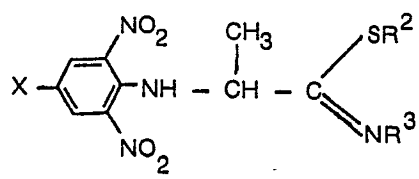

I

dans laquelle X représente un atome d'hydrogène ou d'un halogène ou un groupe alcoyle éventuellement substitué par un halogène et $R^2$ et $R^3$ représentent des groupes alcoyle identiques ou différents, ou leurs sels d'addition d'acide.

2. Un composé selon la revendication 1, caractérisé en ce que X représente un groupe méthyle.

3. Un composé selon l'une des revendications 1 et 2, caractérisé en ce que $R^2$ et $R^3$ représentent chacun indépendamment un groupe méthyle ou éthyle.

4. Un composé selon la revendication 1, caractérisé en ce que c'est le S-méthyl-N-éthyl-2-(2,6-dinitro-4-méthylanilino) propanimidothioate.

5. Un composé selon la revendication 1, caractérisé en ce que c'est le sel d'addition d'acide tétrafluoroborique du S-éthyl-N-éthyl-2-(2,6-dinitro-4-méthylanilino)propanimidothioate.

6. Un composé selon la revendication 1, caractérisé en ce que c'est le sel d'addition d'acide fluorosulfonique du S-méthyl *d*-N-méthyl-2-(2,6-dinitro-4-méthylanilino)propanimidothioate.

7. Un composé selon la revendication 1, caractérisé en ce que c'est le S-méthyl *d,1*-N-méthyl-2-(2,6-dinitro-4-méthylanilino)propanimidothioate.

8. Une composition herbicide et/ou régulatrice de la croissance des plantes comprenant un véhicule et/ou un agent tensio-actif et comme ingrédient actif au moins un composé tel que défini dans la revendication 1.

9. Un procédé pour détruire les plantes indésirables ou empêcher leur croissance en un lieu, caractérisé en ce qu'on applique au lieu à protéger une quantité efficace du point de vue herbicide d'un composé selon la revendication 1 ou d'une composition selon la revendication 8.

**Patentansprüche**

1. Anilinoalkylthiocarbonsäurederivate der allgemeinen Formel

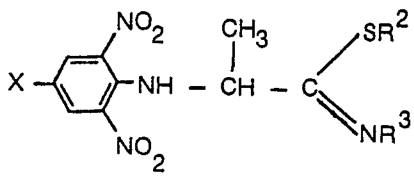

I

worin X ein Wasserstoff- oder Halogenatom oder eine gegebenenfalls durch Halogen substituierte Alkylgruppe vertritt und $R^2$ und $R^3$ gleiche oder unterschiedliche Alkylgruppen darstellen, sowie deren Säureadditionssalze.

2. Verbindung nach Anspruch 1, dadurch gekennzeichnet, dass X für die Methylgruppe steht.

3. Verbindung nach Anspruch 1 oder 2, dadurch gekennzeichnet, dass $R^2$ und $R^3$ voneinander unabhängig je eine Methyl- oder Äthylgruppe bedeuten.

4. Verbindung nach Anspruch 1 welche S-Methyl-N-äthyl-2-(2,6-dinitro-4-methylanilin)-propanimidothioat ist.

5. Verbindung nach Anspruch 1 welche S-Äthyl-N-äthyl-2-(2,6-dinitro-4-methylanilin)-propanimidothioat-Tetrafluorborsäure-Additionssalz ist.

6. Verbindung nach Anspruch 1 welche S-Methyl-*d*-N-methyl-2-(2,6-dinitro-4-methyl-anilin)-propanimidothioat-Fluorsulfonsäure-Additions-salz ist.

7. Verbindung nach Anspruch 1 welche S-Methyl *d,1*-N-methyl-2-(2,6-dinitro-4-methylanilin)-propanimidothioat ist.

8. Mittel mit Herbizidwirkung und/oder das Pflanzenwachstum regulierendes Mittel, umfassend einen Träger und/oder ein oberflächenaktives Mittel und als Wirkstoff mindestens eine der in Anspruch 1 beanspruchten Verbindungen.

9. Verfahren zur Zerstörung oder Verhinderung von unerwünschtem Pflanzenwuchs am Standort, umfassend das Aufbringen der in Anspruch 1 beanspruchten Verbindungen oder der in Anspruch 8 beanspruchten Mittel in einer eine Herbizidwirkung entfaltenden Menge auf den Standort.